# Europäisches Patentamt
# European Patent Office
# Office européen des brevets

(19)

(11) Numéro de publication: **0 083 541**
**B1**

(12)

# FASCICULE DE BREVET EUROPEEN

(45) Date de publication du fascicule du brevet:
14.05.86

(51) Int. Cl.⁴: **B 62 D 5/083**, F 15 B 13/02

(21) Numéro de dépôt: **82402379.0**

(22) Date de dépôt: **23.12.82**

(54) Distributeur rotatif pour servomécanisme hydraulique.

(30) Priorité: **06.01.82 FR 8200090**

(43) Date de publication de la demande:
13.07.83 Bulletin 83/28

(45) Mention de la délivrance du brevet:
14.05.86 Bulletin 86/20

(84) Etats contractants désignés:
**DE GB IT**

(56) Documents cités:
**DE - A - 2 845 301**
**FR - A - 2 445 255**
**FR - E - 88 627**
**GB - A - 1 535 722**
**GB - A - 2 028 240**

(73) Titulaire: **BENDIX France, 126, rue de Stalingrad, F-93700 Drancy (FR)**

(72) Inventeur: **Tanguy, Christian, 34 Bis Avenue Gaston Bourry, F-95740 Frepillon (FR)**

(74) Mandataire: **Le Moenner, Gabriel et al, SERVICE BREVETS BENDIX 44, Rue François 1er, F-75008 Paris (FR)**

# Description

L'invention concerne un distributeur rotatif pour servomécanisme hydraulique et plus particulièrement un nouvel agencement des ouvertures et cavités pratiquées dans celui-ci pour définir le circuit de distribution.

L'invention concerne un distributeur rotatif du type comportant deux éléments de distributeur munis de parties cylindriques coaxiales, respectivement un élément de distributeur externe et un élément de distributeur interne monté tournant dans un alésage axial dudit élément de distributeur externe et susceptible d'une rotation relative limitée par rapport à ce dernier de part et d'autre d'une position relative neutre, les éléments de distributeur comportant des ouvertures et cavités définissant un circuit de circulation de fluide connectable à une source de fluide et à un réservoir de fluide d'une part ainsi qu'à au moins une chambre d'un vérin d'assistance d'autre part, ce circuit comportant des passages à section variable définis dans les surfaces cylindriques de contact desdits éléments de distributeur et matérialisés, d'une part, par un nombre pair de rainures longitudinales fermées à leurs extrémités axiales, réparties régulièrement à la surface interne de l'élément de distributeur externe.

Un distributeur de ce type est décrit dans le document FR-E-88627. Les distributeurs classiques de ce type comportent, outre une série de rainures longitudinales réparties régulièrement à la surface interne de l'élément de distributeur externe, des rainures longitudinales également réparties régulièrement à la surface externe de l'élément de distributeur interne. Ces rainures longitudinales sont décalées de façon que leurs bords coopèrent pour définir les passages à section variable définis ci-dessus, la section de ces passages variant en fonction d'une rotation relative limitée d'un élément de distributeur par rapport à l'autre, de part et d'autre de la position relative neutre définie généralement par l'état de repos d'une barre de torsion reliée par ses extrémités auxdits éléments de distributeur externe et interne, respectivement. Plus récemment on a proposé un distributeur dans lequel les rainures longitudinales de l'élément de distributeur externe étaient remplacées par des perçages borgnes diamétraux pratiqués à intervalles réguliers, de façon que chaque perçage définisse dans l'élément de distributeur externe à la fois un orifice traversant et un évidement, respectivement opposés et positionnés en regard de portées lisses de l'élément de distributeur interne entre des bords adjacents de deux rainures voisines, dans ladite position neutre. Cet agencement du circuit de distributeur s'est révélé donner toute satisfaction sur le plan du fonctionnement du servomécanisme lui-même mais la réalisation des perçages borgnes précités s'est révélée délicate en raison du mauvais guidage du foret au moment où celui-ci commence à pratiquer l'évidement précité à la surface interne de l'élément de distributeur externe.

L'invention propose un nouvel agencement du circuit de distribution présentant des caractéristiques de fonctionnement équivalents mais pour lequel les problèmes de fabrication évoqués ci-dessus ne se posent plus.

L'idée de base de l'invention consiste à transférer les trous borgnes à la surface externe de l'élément de distributeur interne ou rotor, où ils sont beaucoup plus faciles à réaliser avec la précision de positionnement requise.

Dans cet esprit, l'invention concerne donc un distributeur hydraulique rotatif dans lequel les passages à section variable sont matérialisés d'autre part par des alésages pratiqués radialement à intervalles réguliers dans l'élément de distributeur interne et positionnés en regard de portées lisses de l'élément de distributeur externe entre les bords adjacents de deux rainures longitudinales voisines, dans ladite position neutre. Au moins certains alésages sont borgnes pour définir les évidements montionnés ci-dessus susceptibles de mettre en communication deux rainures adjacentes de l'élément de distributeur externe.

A partir de cette structure de base, plusieurs modes de réalisation sont possibles selon que l'on fasse communiquer la pompe et le réservoir avec les rainures de l'élément de distributeur externe ou avec les alésages de l'élément de distributeur interne.

L'invention sera mieux comprise et d'autres avantages de celle-ci apparaîtront mieux à la lumière de la description qui va suivre de deux modes de réalisation d'un distributeur conforme à l'invention, donnée uniquement à titre d'exemple et faite en référence aux dessins annexés dans lesquels:

– la figure 1 est une vue partielle en coupe d'un distributeur conforme à l'invention;

– la figure 2 est une coupe II–II des éléments de distributeur du dispositif de la figure 1;

– la figure 3 est une vue partielle en coupe d'un autre mode de réalisation d'un distributeur conforme à l'invention;

– la figure 4 est une coupe IV–IV des éléments de distributeur du dispositif de la figure 3;

– la figure 5 est une coupe V–V des éléments de distributeur du dispositif de la figure 3; et

– la figure 6 est une coupe VI–VI des éléments de distributeur du dispositif de la figure 3.

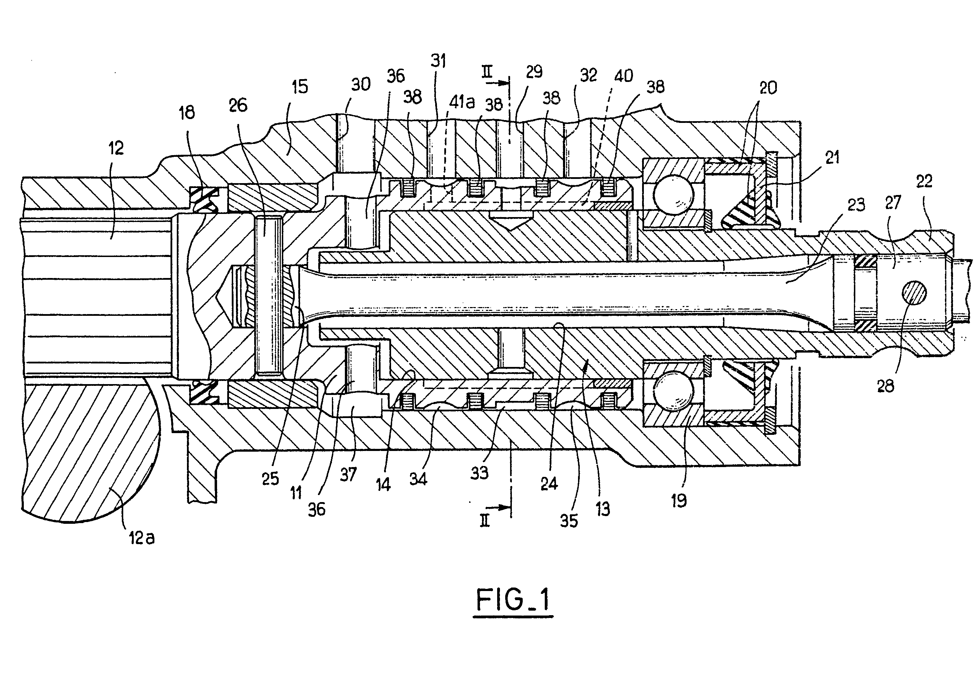

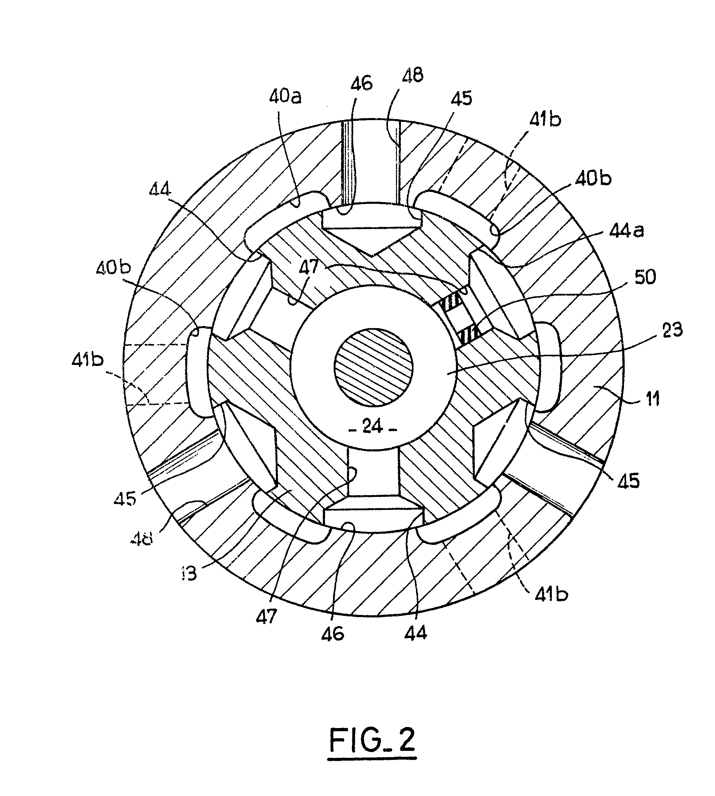

Le dispositif représenté aux figures 1 et 2 comporte un élément de distributeur externe 11, cylindrique, terminé par une portion d'engrenage 12 coopérant avec la crémaillère 12a du système de direction d'un véhicule automobile et un élément de distributeur interne 13 dont une partie cylindrique est montée en rotation dans un alésage axial 14 de l'élément de distributeur 11. Ce dernier est lui-même monté en rotation dans un boîtier fixe 15 venu de matière avec le boîtier de la crémaillère 12a. Un joint annulaire d'étanchéité 18 marque la séparation entre le logement du distributeur et celui de la crémaillère. Un roulement à billes 19 est intercalé entre la surface externe de l'élément de distributeur 13 et la surface interne du boîtier 15. Ses deux cages coopèrent respectivement avec des épaulements dudit boîtier et dudit élément de distributeur interne de façon à définir le positionnement axial de ce dernier. Un joint d'étanchéité 20 renforcé par une coupelle annulaire métallique 21 est également monté entre la surface interne du boîtier 15 et la surface externe de l'élément de distributeur 13 de sorte que la partie terminal 22 de ce dernier fait saillie au-delà de l'ouverture du boîtier 15. La partie terminale 22 est destinée à être reliée à la colonne de direction du véhicule. Une barre de torsion 23 est logée à l'intérieur d'une cavité axiale 24 de l'élément de distributeur interne 13. Cette barre de torsion est reliée par une de ses extrémités 25 à l'élément de distributeur externe 11, par l'intermédiaire d'une goupille 26 et par son autre extrémité 27 à l'élément de distributeur 13 par l'intermédiaire d'une goupille 28. L'état de repos de la barre de torsion 23 définit une position relative neutre entre les deux éléments de distributeur. Le boîter 15 comporte un orifice de raccordement à une source de fluide 29 (une pompe non représentée), un orifice de raccordement à un réservoir de fluide 30 et deux orifices de raccordement à un vérin 31, 32. L'orifice 29 communique avec un passage annulaire 33 défini entre la surface externe de l'élément de distributeur 11 et la surface interne du boîtier 15 tandis que les orifices de raccordement 31 et 32 communiquent respectivement avec des espaces annulaires 34 et 35 définis de la même façon de chaque côté de l'espace annulaire 33. L'orifice de raccordement 30 communique avec la cavité axiale 24 par l'intermédiaire d'un passage annulaire 37 défini entre le boîtier et l'élément de distributeur 11 et de perçages 36 pratiqués radialement dans ce dernier. Les orifices de raccordement 29, 30, 31 et 32 constituent les entrées et les sorties d'un circuit de circulation de fluide constitué par des ouvertures et cavités définies dans les éléments de distributeur 11 et 13. Des joints annulaires 38 disposés à la surface externe de l'élément de distributeur 11 assurent une séparation étanche entre les passages annulaires 33, 34, 35 et 37. Ce circuit comporte des passages à section variable définis dans les surfaces cylindriques de contact des éléments de distributeur 11 et 13. Comme le montre la figure 2, ces passages à section variable sont matérialisés par:

   — six rainures longitudinales 40a, 40b fermées à leurs extrémités axiales réparties régulièrement à la surface interne (c'est-à-dire le long de l'alésage axial 14) de l'élément de distributeur externe, et

   — des alésages 44, 45 pratiqués radialement à intervalles réguliers dans l'élément de distributeur interne et positionnés en regard de portées lisses 46 de l'élément de distributeur externe 11 entre les bords adjacents de deux rainures voisines 40, dans la position neutre représentée. On compte trois alésages borgnes 45 tandis que les trois alésages 44 sont prolongés jusqu'à la cavité axiale 24 par des perçages d'évacuation 47. Les alésages 44 et 45 sont régulièrement alternés à la surface de l'élément de distributeur 13 et leurs axes sont coplanaires, sensiblement en regard du passage annulaire 33. Les alésages borgnes 45 sont en regard de portées lisses 46 sur lesquelles débouchent respectivement des orifices 48 communiquant avec le passage annulaire 33, c'est-à-dire avec les moyens de raccordement à la source de fluide précitée. Les rainures 40a et 40b sont elles aussi alternées circonférentiellement et respectivement en communication avec les passages annulaires 34 et 35, par l'intermédiaire de trous respectifs 41a, 41b pratiqués radialement dans l'élément de distributeur externe 11 en regard de ces passages annulaires.

Selon une autre caractéristique importante de l'invention, les alésages 44 au moins, ont des diamètres différents pour définir des passages à fermetures successives en fonction de la rotation relative dans un sens donné d'un élément de distributeur par rapport à l'autre. C'est en effet la fermeture des passages à section variable définis par la coopération de ces alésages et des rainures 40 voisines qui conditionne la caractéristique du distributeur. D'autre part, une restriction d'écoulement anti-cavitation peut avantageusement être agencé dans le trajet d'écoulement compris entre l'ouverture de l'alésage 44a de plus grand diamètre, située au niveau des surfaces cylindriques de contact des deux éléments de distributeur et les moyens de raccordement au réservoir, notamment la cavité axiale 24. Cette restriction d'écoulement peut par exemple être matérialisée par une bague 50 montée à force dans le passage 47 qui prolonge l'alésage 44a. Cette restriction d'écoulement permet de lutter efficacement contre le bruit résultant des phénomènes de cavitation qui pourraient prendre naissance aux pression de fonctionnement élevées.

Le fonctionnement est classique. Dans la position neutre représentée, le fluide introduit par les trois orifices 48 pénètre dans les alésages borgnes 45 correspondants et se répartit de façon égale entre les rainures 40a et 40b avant d'être évacué parles alésages 44, les perçages d'évacuation 47 et la cavité axiale 24 jusqu'au réservoir (non représenté) connecté à l'orifice 30 du boîtier. Si l'utilisateur imprime une légère rotation à l'élément de distributeur interne 13, à l'encontre de la force de réaction exercée par la barre de torsion, le décalage angulaire se traduit par une restriction de la section de passage entre les rainures 40a et les alésages 44 d'une part et les rainures 40b et les alésages 45 d'autre part. Il en découle une rapide montée en pression dans ces rainures qui se communique à une des chambres du vérin d'assistance de l'installation de servodirection.

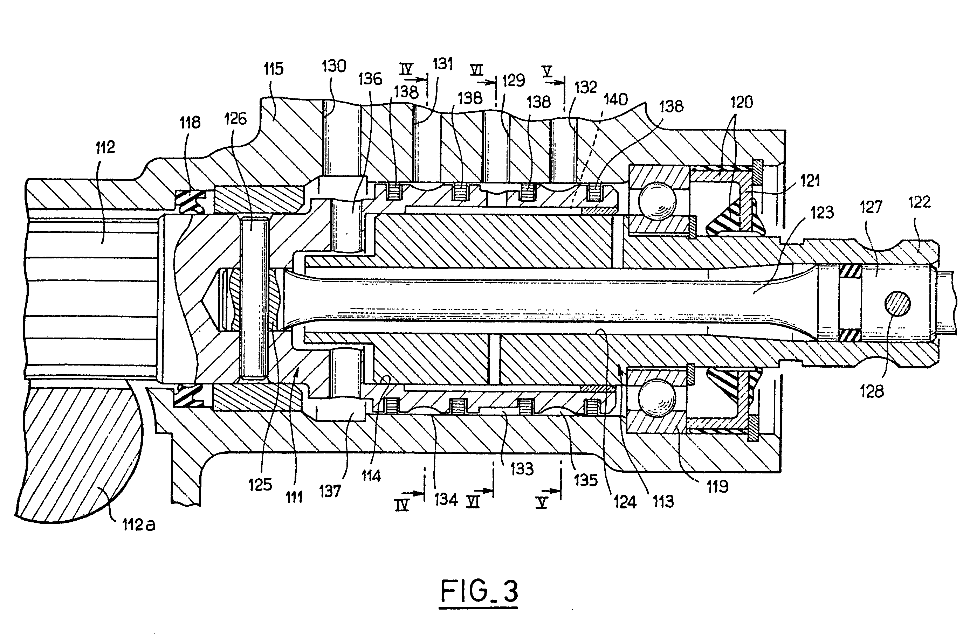

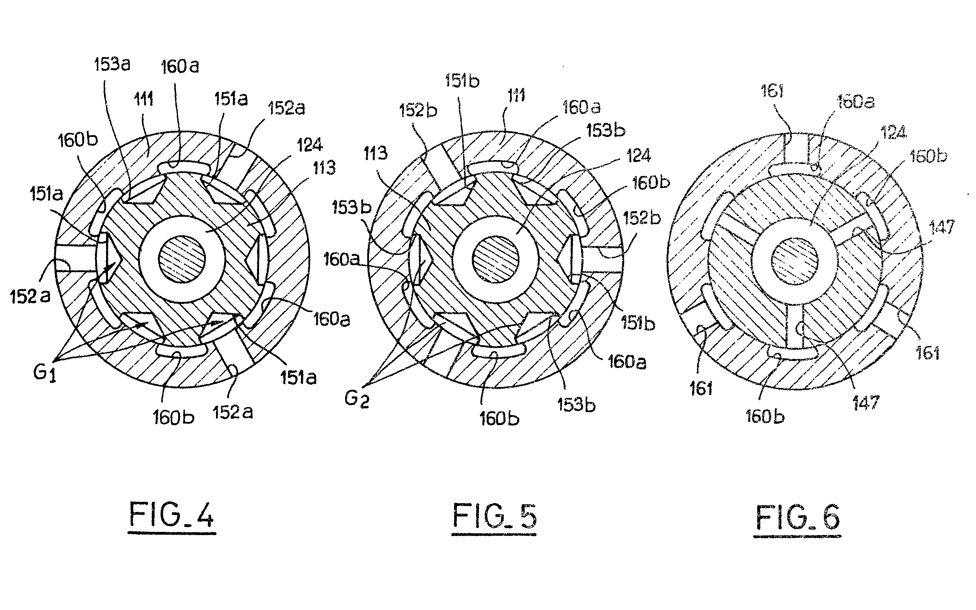

Les figures 3 à 6 illustrent un second mode de réalisation d'un distributeur conforme à l'invention. Dans ces figures, les éléments de structure analogues portent les mêmes références numériques augmentées de 100. Ce mode de réalisation se distingue du précédent par le fait que les alésages pratiqués dans l'élément de distributeur interne sont tous borgnes et répartis en deux groupes $G_1$ et $G_2$ décalés axialement à la surface de l'élément de distributeur interne 113, les alésages borgnes de chaque groupe ayant leurs axes situés dans un même plan en regard des passages annulaires 134 et 135, respectivement. Les alésages

borgnes du groupe $G_1$ sont visibles sur la figure 4 tandis que ceux du groupe $G_2$ sont visibles sur la figure 5. Parmi les six alésages borgnes du groupe $G_1$, trois alésages 151a, décalés entre eux de 120°, sont en regard de portées lisses de la surface interne de l'élément de distributeur externe 111 sur lesquelles débouchent des orifices 152a respectifs communiquant avec le passage annulaire 134. Les trois autres alésages borgnes 153a du groupe $G_1$ également décalés entre eux de 120° sont simplement positionnés en regard des autres portées lisses de l'élément de distributeur externe 111 délimitées entre deux rainures longitudinales adjacentes 160a, 160b. De même, trois alésages gorgnes 151b du groupe $G_2$ décalés entre eux de 120°, sont en regard de portées lisses de l'élément de distributeur externe 111 sur lesquelles débouchent des orifices 152b communiquant avec l'espace annulaire 135. Les alésages bognes 151b sont décalés de 60° pat rapport aux alésages borgnes équivalents 151a. Trois autres alésages borgnes 153b du groupe $G_2$, décalés entre eux de 120°, règlent respectivement la communication entre deux rainures longitudinales voisines 160a, 160b de l'élément de distributeur externe 111. Comme le montre la figure 6, les rainures longitudinales 160a communiquent avec l'espace annulaire 133 par l'intermediaire de perçages 161 pratiqués radialement dans l'élément de distributeur externe 111 tandis que les rainures longitudinales 160b sont en regard de perçages d'évacuation 147 pratiqués radialement dans l'élément de distributeur interne 113 et débouchant dans la cavité axiale 124 de celui-ci- Ainsi, les rainures 160a communiquent avec la source de fluide (non représentée) connectée à l'orifice de raccordement 129 tandis que les rainures longitudinales 160b communiquent avec le réservoir de fluide (non représenté) par l'intermédiaire des perçages d'évacuation 147, de la cavité 124, des perçages 136, du passage annulaire 137 et de l'orifice de raccordement 130.

Le fonctionnement est exactement le même que précédemment bien que les rôles des rainures longitudinales et des alésages soient inversés.

Bien entendu, les alésages borgnes 151, au moins, de chaque groupe $G_1$ et $G_2$ ont des diamètres différents pour déterminer la caractéristique voulue du distributeur. On peut également prévoir une restriction d'écoulement dans le perçage d'évacuation 147 qui communiquent avec la rainure longitudinale 160b située ente les deux alésages borgnes 151a, 151b de plus grand diamètre.

Dans les deux modes de réalisation décrits ci-dessus, on pourrait obtenir la caractéristique voulue du distributeur avec des alésages de même diamètre mais des rainures longitudinales de largeurs différentes.

**Revendications**

1. Distributeur rotatif hydraulique pour servomécanisme, notamment pour système de direction assistée de véhicule automobile, du type comportant deux éléments de distributeur (11, 13; 111, 113) munis de parties cylindriques coaxiales, respectivement un élément de distributeur externe (11, 111) et un élément de distributeur interne (13, 113) monté tournant dans un alésage axial (14; 113) dudit élément de distributeur externe et susceptible d'une rotation relative limitée par rapport à ce dernier de part et d'autre d'une position relative neutre, les éléments de distributeur comportant des ouvertures et cavités définissant un circuit de circulation de fluide connectable à une source de fluide et à un réservoir de fluide d'une part ainsi qu'à au moins une chambre d'un vérin d'assistance d'autre part, ce circuit comportant des passages à section variable définis dans les surfaces cylindriques de contact desdits éléments de distributeur et matérialisés, d'une part, par un nombre pair de rainures longitudinales (40a, 40b; 160a, 160b) fermées à leurs extrémités axiales, réparties régulièrement à la surface interne de l'élément de distributeur externe, caractérisé en ce que les passages à section variable sont matérialisés, d'autre part, par des alésages (44, 45; 151 153) pratiqués radialement à intervalles réguliers dans l'élément de distributeur interne et positionnés en regard de portées lisses (46) de l'élément de distributeur externe entre les bords adjacents de deux rainures longitudinales voisines dans ladite position neutre.

2. Distributeur selon la revendication 1, caractérisé en ce que les alésages sont pour moitié (45) borgnes et pour moitié (44) prolongés (47) jusqu'à une cavite axiale (23) de l'élément de distributeur interne (13) qui communique avec des moyens de raccordement (36, 37, 30) au réservoir de fluide, et en ce que les alésages borgnes (45) sont en regard de portées lisses de la surface interne de l'élément de distributeur externe (11) sur lesquelles débouchent des orifices (48) communiquant avec des moyens de raccordement (33, 29) à la source de fluide.

3. Distributeur selon la revendication 1, caractérisé en ce que les alésages (151, 153) sont tous borgnes et répartis en deux groupes ($G_1$, $G_2$) décalés axialement à la surface de l'élément de distributeur interne (113).

4. Distributeur selon la revendication 3, caractérisé en ce que certains (151) des alésages borgnes de chaque groupe ($G_1$, $G_2$) sont en regard de portées lisses de la surface interne de l'élément de distributeur externe (111) sur lesquelles débouchent des orifices (152a, 152b) communiquant avec des moyens de raccordement à une chambre dudit vérin d'assistance, respectivement pour chaque groupe et en ce que lesdites rainures sont reliées alternativement à (160a) des moyens de raccordement à ladite source de fluide et à (160b) des moyens de raccordement audit réservoir de fluide.

5. Distributeur selon la revendication 4, caractérisé en ce que lesdites rainures (160b) reliées aux moyens de raccordement audit réservoir sont en regard de perçages d'évacuation (147) pratiqués radialement dans ledit élément de distributeur interne (113) et débouchant dans une cavité axiale (124) de celle-ci, laquelle cavité communique avec lesdits moyens de raccordement audit réservoir de fluide.

6. Distributeur selon l'une des revendications précédentes, caractérisé par des alésages précités de diamètres différents pour définir des passages à fermetures successives en fonction de la dite rotation relative dans un sens donné.

7. Distributeur selon la revendication 6, caractérisé en ce qu'une restriction d'écoulement (50) anti-cavitation est agencée dans le ou chaque trajet d'écoulement compris entre l'ouverture du ou chaque alésage (44a) de plus grand diamètre située au niveau des surfaces cylindriques de contact précitées et lesdits moyens de raccordement audit réservoir.

## Patentansprüche

1. Hydraulischer Rotationsverteiler für einen Servomechanismus, insbesondere für die Servolenkungsanlage eines Kraftfahrzeuges, mit zwei Verteilerelementen (11, 13; 111, 113), die mit koaxialen zylindrischen Teilen versehen sind, und zwar einem äusseren Verteilerelement (11, 111) und einem inneren Verteilerelement (13, 113), das in einer Axialbohrung (14; 113) des äusseren Verteilerelementes drehbar gelagert ist und bezüglich des letzteren beidseitig zu einer Nullstellung eine begrenzte Relativdrehung ausführen kann, wobei die Verteilerelemente Öffnungen und Hohlräume aufweisen, die einen Strömungskreis bilden, der einerseits an einer Strömungsmittelquelle und einem Strömungsmittelreservoir und andererseits an mindestens einer Kammer eines Servomotors anschliessbar ist, wobei dieser Strömungskreis Kanäle veränderlichen Querschnitts aufweist, die in den zylindrischen Berührungsflächen der Verteilerelemente vorgesehen sind und einerseits von einer geraden Anzahl von Längsnuten (40a, 40b; 160a, 160b) gebildet werden, die an ihren axialen Enden verschlossen sind und über der Innenfläche des äusseren Verteilerelementes gleichmässig verteilt sind, dadurch gekennzeichnet, dass die Kanäle veränderlichen Querschnitts andererseits von Bohrungen (44, 45; 151, 153) gebildet werden, die mit gleichmässigen Abständen radial in das innere Verteilerelement eingearbeitet sind und in der Nullstellung gegenüber Stegflächen (46) des äusseren Verteilerelements zwischen den angrenzenden Rändern zweier benachbarter Längsnuten liegen.

2. Verteiler nach Anspruch 1, dadurch gekennzeichnet, dass die Bohrungen zur Hälfte (45) Sackbohrungen sind und zur Hälfte (44) verlängert sind bis zu einem axialen Hohlraum (23) des inneren Verteilerelementes (13), der mit Mitteln (36, 37, 30) zum Anschluss am Strömungsmittelreservoir in Verbindung steht, und dass die Sackbohrungen (45) gegenüber Stegflächen der Innenseite des äusseren Verteilerelements (11) angeordnet sind, an denen Öffnungen (48) münden, die mit den Mitteln (33, 29) zum Anschluss an der Strömungsmittelquelle in Verbindung stehen.

3. Verteiler nach Anspruch 1, dadurch gekennzeichnet, dass die Bohrungen (151, 153) sämtlich Sackbohrungen sind und in zwei axial versetzten Gruppen ($G_1$, $G_2$) auf der Oberseite des inneren Verteilerelements (113) verteilt sind.

4. Verteiler nach Anspruch 3, dadurch gekennzeichnet, dass bestimmte Sackbohrungen (15) jeder Gruppe ($G_1$, $G_2$) Stegflächen der Innenseite des äusseren Verteilerelementes (111) gegenüberliegen, an denen Öffnungen (152a, 152b) münden, die mit Mitteln zum Anschluss an einer Kammer des Servomotors in Verbindung stehen, und zwar für jede Gruppe, und dass diese Nuten abwechselnd mit Mitteln (160a) zum Anschluss an der Strömungsmittelquelle und mit Mitteln (160b) zum Anschluss am Strömungsmittelreservoir verbunden sind.

5. Verteiler nach Anspruch 4, dadurch gekennzeichnet, dass die Nuten (160b), die mit den Mitteln zum Anschluss am Reservoir verbunden sind, Entlüftungsbohrungen (147) gegenüberliegen, die radial in das innere Verteilerelement (113) eingearbeitet sind und in einem axialen Hohlraum (124) desselben münden, wobei dieser Hohlraum mit den Mitteln zum Anschluss am Strömungsmittelreservoir in Verbindung steht.

6. Verteiler nach einem der vorhergehenden Ansprüche, dadurch gekennzeichnet, dass die besagten Bohrungen unterschiedliche Durchmesser haben, um Kanäle zu bilden, die in Abhängigkeit von der Relativdrehung in einem vorgegebenen Drehsinn nacheinander geschlossen werden.

7. Verteiler nach Anspruch 6, dadurch gekennzeichnet, dass eine Antikavitation-Drosselstelle (50) in der oder jeder Strömungsbahn zwischen der Öffnung der oder jeder Bohrung (44a) grössten Durchmessers, die auf Höhe der besagten zylindrischen Berührungsflächen angeordnet ist, und den Mitteln zum Anschluss am Reservoir gebildet ist.

## Claims

1. A hydraulic rotary distributor for a servo-mechanism, in particular for a servo-steering system of an automotive vehicle, of the type comprising a pair of distributor elements (11, 13; 111, 113) provided with coaxial cylindrical portions, respectively an external distributor element (11, 111) and an internal distributor element rotatably mounted in an axial bore (14; 113) of said external distributor element and adapted to perform a limited relative rotation with respect to the latter in opposite directions from a relative neutral position, the distributor elements comprising openings and cavities defining a fluid circuit connectable to a fluid source and a fluid reservoir on the one hand and to at least one chamber of a servomotor on the other hand, said circuit comprising passages of variable cross-section defined in the cylindrical contacting surfaces of said distributor elements and constituted on the one hand by an even number of longitudinal grooves (40a, 40b; 160a, 160b) closed at their axial ends and uniformly spaced on the internal surface of the external distributor element, characterized in that the passages of variable cross-section are constituted on the other hand by bores (44, 45; 151, 153) radially formed at regular intervals in the internal distrubutor element and positioned opposite lands (46) of the external distributor element between the adjacent edges of a pair of adjacent longitudinal grooves in said neutral position.

2. Distributor according to claim 1, characterized in that one half (45) of the bores are blind and one half (44) of the bores extend (47) to an axial cavity (23) of the internal distributor element (13), which communicates with means (36, 37, 30) for connection to the fluid reservoir, and in that the blind bores (45) are opposite lands of the internal surface of the external distributor element (11), orifices (48) which communicate with means (33, 29) for connection to the fluid source opening into said lands.

3. Distributor according to claim 1, characterized in that the bores (151, 153) are all blind bores and are arranged in two axially displaced groups (G$_1$, G$_2$) on the surface of the internal distributor element (113).

4. Distributor according to claim 3, characterized in that certain (151) of the blind bores of each group (G$_1$, G$_2$) are positioned opposite lands of the internal surface of the external distributor element (111), orifices (152a, 152b) which communicate with means for connection to a chamber of said servo-motor opening into said lands, respectively for each group, and in that said grooves are connected alternatively to (160a) means for connection to said fluid source and to (160b) means for connection to said fluid reservoir.

5. Distributor according to claim 4, characterized in that said grooves (160b) which are connected to means for connection to said reservoir are positioned opposite radial evacuation bores (147) provided in said internal distributor element (113) and opening into an axial cavity (124) of the latter, said cavity communicating with said means for connection to said fluid reservoir.

6. Distributor according to any of the preceding claims, characterized by said bores being of different diameters for defining passages which are successively closed in response to said relative rotation in a predetermined direction.

7. Distributor according to claim 6, characterized in that an anti-cavitation flow restriction (50) is provided in the or each flow path between the opening of the or each bore (44a) of largest diameter situated at the level of said cylindrical contacting surfaces and said means for connection to said reservoir.

FIG_1

0 083 541

FIG_2

FIG.3

0 083 541

FIG. 4

FIG. 5

FIG. 6